# EUROPÄISCHE PATENTSCHRIFT

(11) **EP 1 510 752 B1**
(45) Veröffentlichungstag und Bekanntmachung des Hinweises auf die Patenterteilung: **25.10.2006**
(21) Anmeldenummer: 03019184.5
(22) Anmeldetag: 25.08.2003
(51) Int. Cl.: F17C 13/12, F16K 17/38

(54) **Brennstoffbehälter mit Thermosicherung**
Fuel vessel with overheating safety device
Réservoir à fuel avec sûreté thermique

(43) Veröffentlichungstag der Anmeldung: 02.03.2005
(73) Patentinhaber: SFC Smart Fuel Cell AG, 85649 Brunnthal-Nord (DE)
(72) Erfinder: Müller, Jens, Dr., 81827 München (DE); Stefener, Manfred, 81827 München (DE); Pöpplau, Jens, Dr., 22297 Hamburg (DE); Fehland, Jörn, 22359 Hamburg (DE)
(74) Vertreter: Grünecker, Kinkeldey, Stockmair & Schwanhäusser Anwaltssozietät

(56) Entgegenhaltungen:
- FR-A- 2 832 205
- GB-A- 1 402 531
- GB-A- 2 209 200
- US-A- 5 787 918
- US-A- 6 155 285
- US-A1- 2003 041 899

## Beschreibung

### Gebiet der Erfindung

Die Erfindung betrifft eine Thermosicherung für einen Fluidbehälter, insbesondere eine Brennstoffpatrone mit einer solchen Thermosicherung, die oberhalb einer gewissen Grenztemperatur das Öffnen der Patrone nicht mehr zulässt.

### Stand der Technik

Brennstoffpatronen mit Flüssigkeiten oder Gasen, die zur Versorgung eines Verbrauchers verwendet werden, sind in der Regel aus Sicherheitsgründen fluiddicht verschlossen, wenn aus ihnen nicht gerade Brennstoff entnommen wird. Als Folge können sich bei erhöhten Umgebungstemperaturen, die in ungünstigen Fällen auftreten können, z.B. in einem in der prallen Sonne geparkten Auto (wo auf dem Armaturenbrett Temperaturen bis 80°C und darüber erreicht werden) oder auf einer dunklen Fläche in direkter Sonneneinstrahlung, in einer Patrone ein hoher Druck aufbauen. Wird nun eine solche unter hohem Druck stehende Brennstoffpatrone an einen Verbraucher, z.B. ein Brennstoffzellensystem, angeschlossen, so können aufgrund des plötzlichen, unter Umständen explosionsartigen, Entweichens einer großen Brennstoffmenge aus der Patrone Einrichtungen des Systems, insbesondere auch die Brennstoffzellen selbst, zerstört werden (z.B. durch unkontrolliertes Einströmen von zu viel Methanol). Ferner besteht die Gefahr, dass Brennstoff nach außen entweicht und die Umgebung kontaminiert bzw. eine akute Feuer-/Explosionsgefahr heraufbeschwört.

Ein System mit solch einer Brennstoffpatrone ist aus dem nächsliegenden Stand der Technik US-A-5 787 918 bekannt, und entspricht dem einleitenden Teil des Anspruches 1.

### Beschreibung der Erfindung

Es ist somit eine Aufgabe der vorliegenden Erfindung, die oben genannten Gefahren zu vermeiden und damit den Umgang mit Brennstoffpatronen sicherer zu machen.

Diese Aufgabe wird gelöst durch das erfindungsgemäße system mit den Merkmalen von Anspruch 1.

Diese Brennstoffpatrone umfasst eine Verschlusseinrichtung, eine Anschlusseinrichtung, die mit einem entsprechend ausgebildeten Gegenstück einer Fluidentnahmevorrichtung verbindbar ist, wobei ein Öffnen der Verschlusseinrichtung eine Fluidentnahme über das Gegenstück erlaubt, und eine Thermosicherung, die nach Überschreiten einer Grenztemperatur bewirkt, dass das Öffnen der Verschlusseinrichtung nicht möglich ist.

Die Anschlusseinrichtung ist vorzugsweise so ausgebildet, dass allein das Gegenstück zur Anschlusseinrichtung, das Teil eines Flüssigkeitsentnahmevorrichtung ist, die zum Zwecke der Brennstoffentnahme mit der Brennstoffpatrone verbunden wird, zur Fluidentnahme geeignet ist. Die Anschlusseinrichtung ist so ausgebildet, dass die Patrone durch den Verbindungsvorgang über das Gegenstück geöffnet wird.

Das Öffnen der Patrone und die Fluidentnahme aus der erfindungsgemäßen Brennstoffpatrone sind aber auch mit dem passenden Gegenstück nicht mehr möglich, nachdem eine bestimmte Grenztemperatur überschritten wurde. Dabei kann das Öffnen der Patrone, d.h. das Betätigen der Verschlusseinrichtung auf unterschiedliche Art und Weise verhindert werden.

Als Beispiele seien für den Spezialfall genannt, bei dem das Öffnen der Patrone im Normalfall (d.h. unterhalb der Grenztemperatur) dadurch erfolgt, dass das Gegenstück mit der Anschlusseinrichtung verbunden wird:
(1) Das Gegenstück kann zwar mit der Anschlusseinrichtung verbunden werden, das Zustandekommen einer Fluidverbindung wird aber durch die Thermosicherung verhindert;
(2) Die Thermosicherung verhindert, dass das Gegenstück überhaupt mit der Anschlusseinrichtung verbunden werden kann.

Das "Verhindern" trifft für die sachgemäße Behandlung der Patrone zu. Öffnen der Patrone durch übermäßige Gewalteinwirkung, die zur Zerstörung der Patrone führt, soll natürlich ausgeschlossen sein.

Die Thermosicherung kann im Fall (2) beispielsweise eine Sperre umfassen, die bei Überschreiten der Grenztemperatur in der Anschlusseinrichtung ausgelöst wird und das Verbinden von Anschlusseinrichtung und Gegenstück verhindert.

Hierbei ist zu beachten, dass eine Verbindung, die bereits vor dem Überschreiten der Grenztemperatur bestanden hat, bewirken kann, dass die Sperre nicht wirksam ausgelöst werden kann, so dass die bereits bestehende Fluidverbindung beim Überschreiten der Grenztemperatur nicht unterbrochen wird. Auch hier trifft zu, dass nach dem Überschreiten der Grenztemperatur das Öffnen der Patrone nicht möglich ist. Wenn sie aber bereits vor dem Überschreiten der Grenztemperatur geöffnet war und dies auch während und nach dem Überschreiten der Grenztemperatur blieb, so ist eine Brennstoffentnahme auch nach dem Überschreiten der Grenztemperatur so lange möglich, bis Verbindung zwischen der Anschlusseinrichtung und dem Gegenstück gelöst wird. Wenn hierbei eine permanente Fluidentnahme erfolgte, kann sich in der Patrone beim Überschreiten der Grenztemperatur kein erhöhter Druck aufbauen, so dass diese Weiterbildung zum einen sehr nutzerfreundlich ist, zum anderen aber dennoch erhöhte Sicherheit gegenüber einer herkömmlichen Brennstoffpatrone bietet.

In einer bevorzugten alternativen Weiterbildung ist die Thermosicherung aber so ausgebildet, dass nach dem Überschreiten einer Grenztemperatur eine Brennstoffentnahme aus der Patrone nicht möglich ist, unabhängig davon, ob die Brennstoffpatrone vor/bei dem Überschreiten der Grenztemperatur mit dem Gegenstück verbunden war. Diese Weiterbildung bietet eine erhöhte Sicherheit bei der Handhabung der Brennstoffpatrone. Diese Weiterbildung lässt sich besonders einfach realisieren, wenn die Thermosicherung Teil der Verschlusseinrichtung ist. In diesem Fall kann die Thermosicherung beispielsweise ein Ventil umfassen, das mit einem weiteren, mechanisch betätigbaren Ventil der Verschlusseinrichtung im Auslasskanal der Patrone in Serie geschaltet ist. Der Normalzustand des Ventils der Thermosicherung ist "geöffnet"; wenn die Grenztemperatur überschritten wird, schließt dieses Ventil, so dass die Patrone unabhängig von der Stellung des weiteren, mechanisch betätigbaren Ventils geschlossen ist.

Vorzugsweise umfasst die Thermosicherung der Brennstoffpatrone einen reversiblen Mechanismus, der das Öffnen der Patrone und damit die Brennstoffentnahme wieder möglich macht, sobald die Temperatur wieder unter die Grenztemperatur fällt. Ein solcher reversibler Mechanismus kann beispielsweise durch Bimetallelemente gebildet werden.

In einer alternativen bevorzugten Weiterbildung ist die Thermosicherung dagegen irreversibel ausgebildet, so dass nach einem einmaligen Überschreiten einer Grenztemperatur kein Öffnen der Patrone mehr möglich ist, d.h. selbst dann, wenn die Temperatur wieder unterhalb die Grenztemperatur zurückgegangen ist.

Vorzugsweise umfasst die irreversibel ausgebildete Thermosicherung eine Komponente aus einer schmelzenden Substanz, die beim Überschreiten der Grenztemperatur schmilzt.

Eine solche Substanz kann eine Wachsart (z.B. Paraffin) sein. Bei Paraffinen (CₙH₂ₙ₊₂) beobachtet man eine kontinuierliche Zunahme der Schmelztemperatur mit n, beispielsweise von etwa 30°C auf etwa 90°C für n zwischen 18 und 48, also näherungsweise eine Abstufung der Schmelztemperaturen von 2°C. Eine Thermosicherung mit einer in diesem Bereich liegenden Grenztemperatur kann also mit einem geeigneten Paraffin mit einer Genauigkeit von etwa einem Grad realisiert werden.

Darüber hinaus erfordert eine solche Thermosicherung keine aufwändige Mechanik, wie dies unter Umständen zur Realisierung eines reversiblen Mechanismus der Fall ist. Die schmelzbare Komponente kann ein Widerlager definieren, wobei das Schmelzen die Funktion als Widerlager aufhebt und einen Mechanismus ausgelöst, der nicht mehr zulässt, dass beim Verbinden von Gegenstück und Anschlusseinrichtung einer Fluidverbindung zustande kommt, oder alternativ verhindert, dass das Gegenstück überhaupt mit der Anschlusseinrichtung verbunden werden kann. Die wesentlichen Vorteile einer Thermosicherung sind die hohe Temperaturgenauigkeit und die gleichzeitig geringen Kosten.

In einer bevorzugten Weiterbildung umfasst die Brennstoffpatrone eine Anzeigeeinrichtung, die anzeigt, wenn das Öffnen der Patrone nicht möglich ist. Dadurch kann unter anderem vermieden werden, dass die Anschlusseinrichtung oder das dazugehörige Gegenstück einer Entnahmeeinrichtung beim Versuch, die Brennstoffpatrone zu öffnen, beschädigt werden. Die Anzeigeeinrichtung wird vorzugsweise durch das Auslösen der Thermosicherung aktiviert.

Zur besseren Veranschaulichung der Erfindung wird diese nachfolgend anhand besonders bevorzugter Ausführungsformen unter Bezugnahme auf die beigefügte Figur erläutert.

Es zeigen:
- Fig. 1:: eine schematische 3D-Ansicht einer Brennstoffpatrone;
- Fig. 2:: eine Schnittansicht der in Fig. 1 gezeigten Brennstoffpatrone;
- Fig. 3:: einen vergrößerten Ausschnitt der in Fig. 2 gezeigten Brennstoffpatrone im Bereich der Anschlusseinrichtung;
- Fig. 4:: den Ausschnitt von Fig. 3 nach dem Öffnen durch Verbinden mit einem Gegenstück einer Entnahmevorrichtung;
- Fig. 5:: den Ausschnitt von Fig. 3 und Fig. 4 nach dem Schließen des Sicherheitsventils nach dem Überschreiten einer vorgegebenen Grenztemperatur.

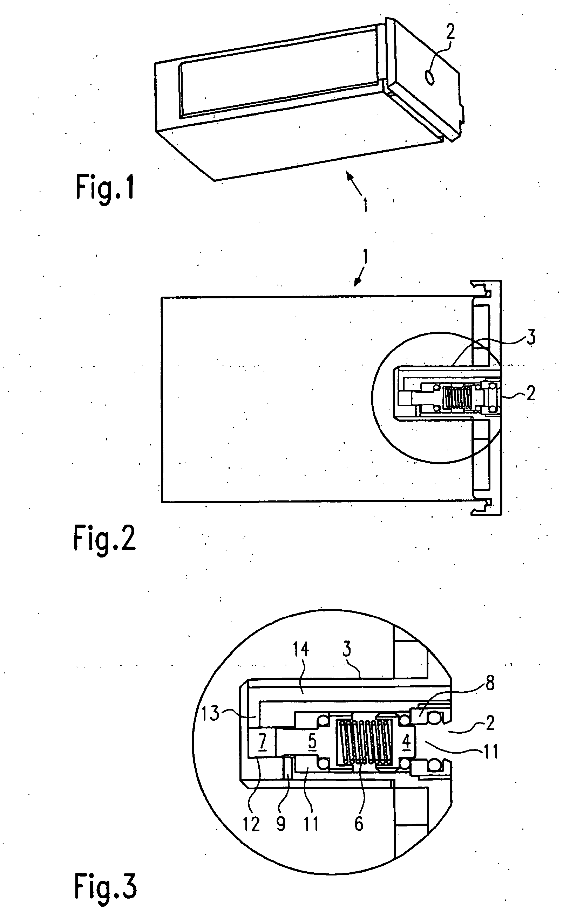

Fig. 1 ist eine schematische dreidimensionale Ansicht einer Brennstoffpatrone 1, die in die Entnahmeeinrichtung eines Brennstoffzellensystems eingesetzt werden kann, um dieses mit Brennstoff, beispielsweise Methanol bei einer DMFC (Direct Methanol Fuel Cell) Brennstoffzelle, zu versorgen. Die Brennstoffpatrone 1 weist eine Anschlusseinrichtung 2 auf, in die eine passend ausgebildete Entnahmeeinrichtung einzuführen ist, um Brennstoff aus der Patrone zu entnehmen.

Wie anhand der Schnittansicht von Fig. 2 ersichtlich ist, ist patronenseitig hinter der Anschlusseinrichtung 2 der Patrone 1 eine Verschlusseinrichtung 3 vorgesehen. Diese Verschlusseinrichtung 3 umfasst Elemente, die die Patrone fluiddicht verschließen, wenn keine Brennstoffentnahme erfolgt, und Elemente, die es ermöglichen erlauben, dass die Patrone 1 durch Verbinden mit dem entsprechend ausgebildeten Gegenstück 20 der Entnahmeeinrichtung geöffnet werden kann.

Zur besseren Erläuterung der Verschlusseinrichtung 3 ist der in Fig. 2 mit einem Kreis umgebene Ausschnitt im Bereich der Verschlusseinrichtung 3 in Fig. 3 in einer vergrößerten Darstellung wiedergegeben.

Wie Fig. 3 verdeutlicht, ist die Verschlusseinrichtung 3 in einer ersten Bohrung 11 vorgesehen, die verbraucherseitig mit der Anschlusseinrichtung 2 endet. Am gegenüberliegenden patronenseitigen Ende der ersten Bohrung 11 schließt sich eine koaxiale zweite Bohrung 12 mit kleinerem Querschnitt an, die an ihrem patronenseitigen Ende mit einer senkrecht dazu vorgesehenen dritten Bohrung 13 kommuniziert. Letztere wiederum kommuniziert mit einer vierten Bohrung 14, die parallel zur ersten 11 und zweiten Bohrung 12 verläuft. Für die Fluidverbindung zwischen dem Fluidreservoir in der Patrone 1 und der ersten Bohrung 11 sorgt ein seitlich in die zweite Bohrung 12 mündender Kanal 9.

In der ersten bzw. zweiten Bohrung 11, 12 sind, in der Reihenfolge beginnend von der Auslassseite, die folgenden Komponenten der Verschlusseinrichtung 3 vorgesehen: ein Auslassventil 4, eine Druckfeder 6, ein Sicherheitsventil 5, sowie ein fester Wachspfropfen 7.

Die Druckfeder 6 ist so zwischen Auslassventil 4 und Sicherheitsventil 5 vorgesehen, dass sie diese beiden, axial begrenzt bewegbaren Ventile gegenseitig druckbeaufschlagt.

Die beiden Ventile 4 und 5 umfassen jeweils einen mehr oder weniger axialsymmetrischen Ventilkörper, der jeweils einen ersten Abschnitt mit einem geringerem (nicht notwendigerweise konstantem) Durchmesser und einen zweiten Abschnitt mit einem größeren Durchmesser aufweist, der geringfügig kleiner als der Durchmesser der ersten Bohrung 11 ist, damit eine saubere und möglichst spielfreie axiale Führung der Ventile in der ersten Bohrung gewährleistet ist. Der zweite Abschnitt mit dem größeren Durchmesser weist im abgebildeten bevorzugten Ausführungsbeispiel außerdem jeweils eine axiale Bohrung, die zur Aufnahme der Druckfeder 6 dient.

Die beiden Ventilkörper sind so vorgesehen, dass sich die beiden Abschnitte mit größeren Durchmesser gegenüberliegen und die beiden axialen Bohrungen jeweils ein Ende der Druckfeder 6 aufnehmen.

Es sei ausdrücklich darauf hingewiesen, dass diese Ventilkörper keine dichtende Funktion haben. Vielmehr soll zwischen den Ventilkörpern und der Innenwand der ersten Bohrung 11 das Brennstofffluid in axialer Richtung strömen können. Um eine solche Strömung zu ermöglichen oder zu verbessern, können daher im Umfangsbereich der Ventilkörper Nuten vorgesehen sein (nicht gezeigt). Die dichtende Funktion wird durch O-Ringe erfüllt, die über den Abschnitt mit geringerem Durchmesser gestülpt sind und an der Stirnfläche anliegen, die am Übergang vom Abschnitt mit geringerem Durchmesser zum Abschnitt mit größerem Durchmesser ausgebildet ist.

Beim in Fig. 3 skizzierten Zustand liegt der O-Ring des Auslassventils 4 zudem an einem auslassseitigen Anschlag an, der durch die patronenseitig Stirnseite eines ringförmigen Einsatzkörpers 8 gebildet wird, welcher in das Auslassende 2 eingepasst ist, wodurch die Patrone 1 fluiddicht verschlossen wird.

Der Einsatzkörper 8 weist an seiner Innenseite eine radial verlaufende Nut auf, in die ein weiterer O-Ring eingepasst ist. Dieser O-Ring gewährleistet, dass das Gegenstück 20 einer Entnahmeeinrichtung in die Anschlusseinrichtung 2 unter Ausbildung einer fluiddichten Verbindung eingeführt werden kann.

Der Wachspfropfen 7, der einen patronenseitiger Abschnitt der zweiten Bohrung 12 ausfüllt, dient als patronenseitiger Anschlag (Widerlager) für das geöffnete Sicherheitsventil 5 (Als patronenseitiger Anschlag für das geschlossene Sicherheitsventil 5 dient die ringförmige Stirnfläche der ersten Bohrung 11, die durch die zweite Bohrung 12 durchstoßen wird; vgl. auch Fig. 5).

Die dritte und vierte Bohrung bilden einen Ausweichkanal 13, 14, in den das geschmolzene Wachs nach dem Überschreiten der Schmelztemperatur unter Einwirken des axial in Richtung Patroneninneres verschobenen Sicherheitsventils 5 verdrängt wird. Die Wachsart und damit die Schmelztemperatur wird entsprechend der erwünschten Grenztemperatur ausgewählt. Der Ausweichkanal 13, 14 muss ausreichend groß dimensioniert sein, um das gesamte geschmolzene Wachs aufnehmen zu können. Im vorliegenden Ausführungsbeispiel erstreckt sich die vierte Bohrung 14 sogar bis zur Außenseite der Patrone und ist dort offen oder mit einem Sichtfenster verschlossen. Dies ermöglicht es, visuell zu überprüften, ob der originale feste Wachspfropfen 7 noch intakt ist, oder ob die Grenztemperatur überschritten ist bzw. zwischenzeitlich überschritten wurde und somit Wachs in den Ausweichkanal 13, 14 verdrängt wurde.

Wenn - wie in Fig. 3 gezeigt - keine Entnahmeeinrichtung vorgesehen ist und eine vorgegebene Grenztemperatur noch nicht überschritten wurde, ist das Auslassventil 4 geschlossen und das Sicherheitsventil 5 offen, so dass Brennstoff aus dem Patroneninneren über den Kanal 9 in den Abschnitt der ersten Bohrung 11 strömen kann, der durch das Auslassventil 4 gegenüber der Anschlusseinrichtung 2 abgedichtet wird, aber nicht nach außen gelangen kann. D.h., die Verschlusseinrichtung 3 ist insgesamt geschlossen.

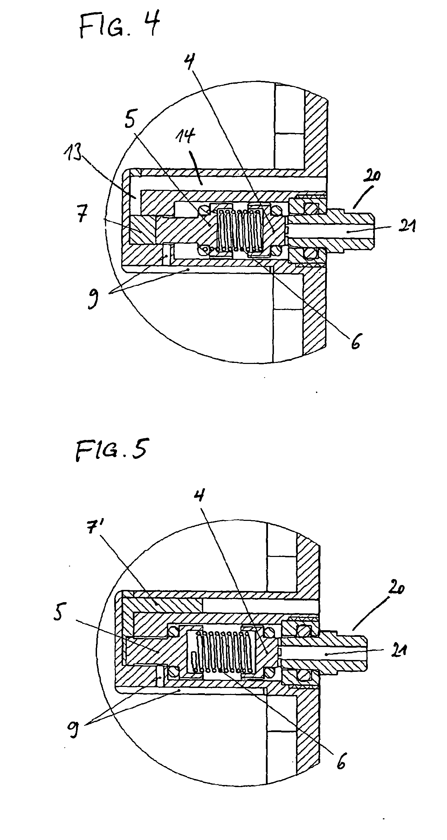

Fig. 4 zeigt nun, wie unter Verwendung eines zur Anschlusseinrichtung 2 der Patrone 1 passenden Gegenstücks 20 einer Entnahmevorrichtung Brennstoff aus der Patrone 1 entnommen werden kann.

Durch Einführen des Gegenstücks 20 wird das Auslassventil 4 axial in Richtung Patroneninneres verschoben, so dass der O-Ring des Auslassventil den Innenbereich der ersten Bohrung 11 nicht mehr gegen ihren äußeren Bereich (im Bereich der Anschlusseinrichtung 2) abdichtet, d.h. das Auslassventil 4 wird geöffnet. Das Gegenstück 20 liegt in seinem zylindrische Umfangsbereich dichtend am O-Ring des Einsatzkörpers 8, so dass Brennstoff ausschließlich über eine Kanüle 21 im Gegenstück 20 abgeführt werden kann.

Der Pressdruck dieses O-Rings auf den Umfangsbereich des Gegenstücks 20 kann ausreichend sein, um eine stabile mechanische Verbindung zwischen Patrone 1 und Gegenstück 20 zu gewährleisten. Es können aber auch nicht gezeigte Einrichtungen für eine mechanische Arretierung des Gegenstücks 20 an der Patrone 1 vorgesehen werden.

Die analog zu Fig. 4 ausgeführte Fig. 5 zeigt nun die Situation, die vorliegt, wenn die vorgegebene Grenztemperatur überschritten wird (oder wurde).

Der in der zweiten Bohrung 12 vorgesehene Wachspfropfen 7 ist geschmolzen und das geschmolzene Wachs 7' wurde durch das in der zweiten Bohrung 12 geführte Ende der Körpers der Sicherheitsventils 5 unter Expansion der Druckfeder 6 in den Ausweichkanal 13, 14 verdrängt. Damit entfällt der Wachspfropfen 7 als patronenseitiger Anschlag für das geöffnete Sicherheitsventil 5 und der O-Ring des Sicherheitsventil 5 wird an die ringförmige Stirnfläche der ersten Bohrung 11, die durch die zweite Bohrung 12 durchstoßen wird, unter Wirkung der Druckfeder 6 gepresst. Dadurch wird die Fluidverbindung zwischen dem Kanal 9 und der ersten Bohrung 11 unterbrochen: das Sicherheitsventil 5 - und damit auch die gesamte Verschlusseinrichtung 3 - ist geschlossen und eine Fluidentnahme aus dem Brennstoffreservoir in der Patrone 1 ist nicht mehr möglich (eine etwaige Restmenge im Bereich der ersten Bohrung 11 kann vernachlässigt werden).

Die Dimension des Ausweichkanals 13, 14 und die Menge an Wachs 7 werden vorzugsweise so gewählt, dass das schmelzende oder geschmolzene Wachs 7' in einem Sichtfenster am Ende der vierten Bohrung 14 eine farbige Markierung bewirkt, die dem Nutzer die Nichtverwendbarkeit der Patrone 1 signalisiert. Damit kann auch ein "Erziehungseffekt" für den Benutzer ausgeübt werden.

Für Anwendungen bei DMFC-Brennstoffzellen ist die mit Methanol zu füllende Brennstoffpatrone 1 so gestaltet, dass der äußere Aufbau einem gewissen Innendruck (vorzugsweise 1-2 bar Überdruck) widersteht.

Obwohl die Beschreibung der Erfindung anhand eines Ausführungsbeispiels mit einem irreversiblen Thermosicherung erfolgte, umfasst die Erfindung auch reversibel ausgebildete Thermosicherungen, die z.B. Bimetallstreifen verwenden, welche sich nahezu reversibel gegenüber Temperaturänderungen verhalten. Alternative Ausführungsformen bestehen aus einer thermisch aktivierten, mechanischen Sperre im Anschlussbereich, die den mechanischen Anschluss der Tankpatrone unterbindet.

Austauschbare Brennstoffpatronen (Tankpatronen) unterliegen einem enormen Kostendruck. Mit der vorliegenden Erfindung, die konstruktiv einfach realisierbar ist und die Verwendung äußerst preisgünstiger Materialien ermöglicht, wird ein wirksamer "Schutz bei hohen Temperaturen" ermöglicht, ohne dass dadurch die Herstellungskosten für eine Brennstoffpatrone signifikant steigen.

## Patentansprüche

1. System, umfassend:
eine Brennstoffpatrone (1) mit Verschlusseinrichtung (3),
einer Anschlusseinrichtung (2), und,
einer Thermosicherung (5,6,7), die nach Überschreiten einer Grenztemperatur bewirkt, dass das Öffnen der Verschlusseinrichtung (3) nicht möglich ist; eine Fluidentnahmevorrichtung mit einem Gegenstück (20), **dadurch gekennzeichnet, daß** die Anschlussvorrrichtung (2) und das Gegenstück (20) derart verbindbar sind, dass die Brennstoffpatrone (1) ohne separaten Vorgang zur Betätigung der Verschlusseinrichtung (3) geöffnet wird.

2. System nach Anspruch 1, wobei die Thermosicherung (5,6,7) so ausgebildet ist, dass bei überschrittener Grenztemperatur eine Brennstoffentnahme aus der Patrone (1) nicht möglich ist.

3. System nach Anspruch 1 oder 2, wobei die Verschlusseinrichtung (3) die Thermosicherung (5,6,7) umfasst.

4. System nach einem der Ansprüche 1 bis 3, wobei die Thermosicherung einen reversiblen Mechanismus umfasst.

5. System nach einem der Ansprüche 1 bis 3, wobei die Thermosicherung (5,6,7) irreversibel ausgebildet ist, so dass nach einem einmaligen Überschreiten einer Grenztemperatur kein Öffnen der Patrone (1) mehr möglich ist

6. System nach Anspruch 5, wobei die Thermosicherung (5,6,7) wenigstens eine Komponente (7) umfasst, die beim Überschreiten der Grenztemperatur schmilzt.

7. System nach Anspruch 6, wobei die wenigstens eine Komponente (7) eine Wachsart umfasst, die beim Überschreiten der Grenztemperatur schmilzt.

8. System nach Anspruch 6 oder 7, wobei die wenigstens eine Komponente (7) ein Widerlager für ein Sicherheitsventil (5) darstellt, wobei die Funktion als Widerlager aufgehoben wird, wenn die wenigstens eine Komponente (7) schmilzt oder geschmolzen ist.

9. System nach einem der vorangegangenen Ansprüche, umfassend:
eine Anzeigeeinrichtung, die anzeigt, wenn das Öffnen der Verschlusseinrichtung (4,6) nicht möglich ist.

10. System nach Anspruch 9, wobei die Anzeigeeinrichtung durch die Thermosicherung aktiviert wird.

## Claims

1. A system comprising a fuel cartridge (1) with a closure device (3), a connector device (2) and a thermal safety device (5,6,7) which, after a limit temperature is exceeded, ensures that the closure device (3) cannot open, a fluid-discharge device with a counterpart (20), **characterised in that** the connector device (2) and the counterpart (20) can be connected in such a way that the fuel cartridge (1) is opened without a separate operation to actuate the closure device (3).

2. A system according to Claim 1, wherein the thermal safety device (5,6,7) is designed so that, when the limit temperature is exceeded, fuel cannot be discharged from the cartridge (1).

3. A system according to Claim 1 or 2, wherein the closure device (3) comprises the thermal safety device (5,6,7).

4. A system according to any one of Claims 1 to 3, wherein the thermal safety device comprises a reversible mechanism.

5. A system according to any one of Claims 1 to 3, wherein the thermal safety device (5,6,7) is designed to be irreversible so that, after exceeding a limit temperature once, it is no longer possible for the cartridge (1) to open.

6. A system according to Claim 5, wherein the thermal safety device (5,6,7) comprises at least one component (7) which melts when the limit temperature is exceeded.

7. A system according to Claim 6, wherein the at least one component (7) comprises a type of wax which melts when the limit temperature is exceeded.

8. A system according to Claim 6 or 7, wherein the at least one component (7) represents an abutment for a safety valve (5), the function of abutment being cancelled when the at least one component (7) melts or is molten.

9. A system according to any one of the preceding Claims, comprising:
an indicating means which indicates when the opening of the closure device (4,6) is not possible.

10. A system according to Claim 9, wherein the indicating means is activated by the thermal safety device.

## Revendications

1. Système comprenant :
une cartouche de combustible avec un dispositif de fermeture (3),
un dispositif de raccordement (2) et
une sûreté thermique (5, 6, 7), qui fait que, après le dépassement d'une température limite, l'ouverture du dispositif de fermeture (3) est impossible ;
un dispositif de prélèvement de fluide avec une pièce inverse (20),
**caractérisé en ce que** le dispositif de raccordement (2) et la pièce inverse (20) peuvent être liés de telle sorte que la cartouche de combustible (1) est ouverte sans opération séparée pour l'actionnement du dispositif de fermeture (3).

2. Système selon la revendication 1, la sûreté thermique (5, 6, 7) étant réalisé de telle sorte que, après un dépassement de la température limite, un prélèvement du combustible de la cartouche (1) est impossible.

3. Système selon la revendication 1 ou 2, le dispositif de fermeture (3) comprenant la sûreté thermique (5, 6, 7).

4. Système selon l'une quelconque des revendications 1 à 3, la sûreté thermique comprenant un mécanisme réversible.

5. Système selon l'une quelconque des revendications 1 à 3, la sûreté thermique (5, 6, 7) étant conçue de façon irréversible, de sorte que, après un unique dépassement d'une température limite, aucune ouverture de la cartouche (1) n'est plus possible.

6. Système selon la revendication 5, la sûreté thermique (5, 6, 7) comprenant au moins un composant (7), qui fond en cas de dépassement de la température limite.

7. Système selon la revendication 6, le au moins un composant (7) comprenant un type de cire qui fond en cas de dépassement de la température limite.

8. Système selon la revendication 6 ou 7, le au moins un composant (7) représentant une butée pour une vanne de sûreté (5), la fonction en tant que butée étant supprimée lorsque le au moins un composant (7) fond ou a fondu.

9. Système selon l'une quelconque des revendications précédentes, comprenant :
un système d'affichage qui indique le moment où l'ouverture du dispositif de fermeture (4, 6) est impossible.

10. Système selon la revendication 9, le dispositif d'affichage étant activé par la sûreté thermique.
